# EUROPEAN PATENT APPLICATION

(11) **EP 3 006 714 A1**
(43) Date of publication of application: **13.04.2016**
(21) Application number: 15179954.1
(22) Date of filing: 06.08.2015
(51) Int. Cl.: F02K 9/60, F02K 9/62, F02K 7/06, F02K 7/067, F02C 3/16, F23R 7/00

(54) **PULSE DETONATION COMBUSTOR**

(30) Priority: 09.10.2014 US 201462061867 P
(71) Applicant: United Technologies Corporation, Hartford, CT 06101 (US)
(72) Inventor: HILL, James D, Tolland, CT Connecticut 06084 (US); HAAS, Martin, Columbia, CT Connecticut 06237 (US); FOWLER, Robert B, Jupiter, FL Florida 22458 (US); LOVETT, Jeffery A, Tolland, CT Connecticut 06084 (US); BLINN, Roger F, Amston, CT Connecticut 06231 (US)
(74) Representative: Gittins, Alex Michael

(57) **Abstract**

A pulse detonation combustor may include a valve (38) and a tubular combustor wall (36), which forms an airflow inlet (48) and a combustion chamber (50). The valve (38) may be configured to selectively fluidly couple the airflow inlet (48) with the combustion chamber (50). The valve (38) may include a center body (56) and an annular projection. The center body (56) and the projection may be configured to sealingly engage with one another.

## Description

### BACKGROUND OF THE INVENTION

### 1. Technical Field

This disclosure relates generally to a combustor used to provide constant-volume combustion such as a pulse detonation device. Such a pulse detonation combustor may be used as part of a gas turbine engine but could also be used in non-turbine applications such as mixing/agitation/pulverizing or cleaning or drilling or for Direct Thrust or Augmenter applications.

### 2. Background Information

A pulse detonation engine may include an array of pulse detonation combustors or a single pulse detonation engine. The pulse detonation combustor mixes the fuel with the engine air flow and bums the fuel to generate high temperature gas products that can then be used to extract work. The pressure of the gas mixture is also increased in the case of a constant-volume combustion process providing additional available work compared to constant-pressure combustion. For the turbine application, each of the combustors is configured to receive compressed air from a compressor. Fuel is injected into the compressed air within a combustion chamber of each pulse detonation combustor. This fuel-air mixture is subsequently ignited in the constant volume device causing the fuel mixture to detonate and generate a detonation wave which bums the fuel and raises the pressure in the combustor. The gases are then exhausted to generate thrust or through a turbine to power a turbine engine. In some engines, fuel may also be injected upstream of the combustion chamber to promote mixing prior to apportioning the fuel/air mixture to the combustion chamber.

To prevent the detonation wave from traveling upstream from the combustion chamber and into the compressor for the turbine application, each of the pulse detonation combustors is configured with a valve that selectively couples the compressor to the combustion chambers. One exemplary valve that was used for an array of pulse detonation combustors for the turbine application utilizes a rotating plate. The rotating plate has a plurality of orifices proximate its outer periphery. When one of these orifices aligns with a respective one of the pulse detonation combustors, it fluidly couples the pulse detonation combustion chamber with the compressor. In contrast, when the orifices are misaligned with a respective one of the pulse detonation combustors, it fluidly decouples the combustion chamber of that combustor from the compressor. Such rotating plates, however, may add a significant amount of weight to the engine and are difficult to seal completely. Furthermore, the frequency of detonation typically must be relatively small due to rotational speed constraints of the rotating plate. In addition, the relationship of the open/close sequence of individual pulse detonation combustors to each other is fixed. Also, the relationship of the open to closed portions of the cycle for an individual pulse detonation combustor is also fixed.

There is a need in the art for an improved valve assembly for a pulse detonation combustor.

### SUMMARY OF THE DISCLOSURE

According to an aspect of the invention, a pulse detonation combustor is provided that includes a valve and a tubular combustor wall that forms an airflow inlet and a combustion chamber. The valve is configured to selectively fluidly couple the airflow inlet with the combustion chamber. The valve includes a center body and an annular projection. The center body and the projection are configured to sealingly engage with one another.

According to another aspect of the invention, another pulse detonation combustor is provided that includes a valve and a tubular combustor wall that forms an airflow inlet and a combustion chamber. The valve includes a center body and an annular projection fixed relative to the combustor wall. At least a portion of the center body is configured to selectively (i) engage the projection to fluidly decouple the airflow inlet from the combustion chamber and (ii) disengage the projection to fluidly couple the airflow inlet with the combustion chamber.

According to still another aspect of the invention, another pulse detonation combustor is provided that includes a valve and a tubular combustor wall that forms an airflow inlet and a combustion chamber. The valve is configured to selectively fluidly couple the airflow inlet with the combustion chamber. The valve includes a fixed center body and an annular translating sleeve.

The sleeve may be configured to translate along a centerline of the combustor wall relative to the center body to selectively open and close the respective valve.

The sleeve may include an annular ridge that projects radially inward. The ridge may be configured to axially engage the center body.

An actuator may be included and configured to move the sleeve relative to the center body.

The valve may include an annular translating sleeve that includes or is configured as the projection.

The translating sleeve may be configured to translate along a centerline of the combustor wall relative to the center body to selectively open and close the valve.

The center body may be attached to the combustor wall by one or more struts.

The projection may be configured to axially engage the center body.

The projection may be fixed. At least a portion of the center body may be configured to translate along a centerline of the combustor wall relative to the projection to selectively open and close the respective valve.

The projection may be configured into the combustor wall.

The center body may include a translating portion and a fixed portion that is attached to the combustor wall by one or more struts.

An actuator may be included and configured to move the translating portion relative to the fixed portion.

A fuel injector and an igniter may be included and arranged with the combustion chamber.

During a step of a pulse detonation cycle, the valve may be configured to fluidly couple the airflow inlet with the combustion chamber and/or the injector may be configured to inject fuel into the combustion chamber.

During a step of a pulse detonation cycle, the valve may be configured to fluidly decouple the airflow inlet from the combustion chamber and/or the igniter may be configured to ignite a fuel-air mixture within the combustion chamber.

The center body may have a generally aerodynamically shaped cross-sectional geometry.

The center body may be attached to the combustor wall by a strut. A fuel conduit may be included and extend through the strut and into the center body to a nozzle configured with the center body.

The foregoing features and the operation of the invention will become more apparent in light of the following description and the accompanying drawings.

### BRIEF DESCRIPTION OF THE DRAWINGS

FIG. 1 is a schematic side illustration of a turbine engine with a pulse detonation combustor.
FIG. 2 is a schematic side illustration of an array of pulse detonation combustors.
FIG. 3 is a schematic front illustration of the pulse detonation combustor array of FIG. 2.
FIG. 4 is a perspective side sectional illustration of an air-valve with a sliding sleeve and a portion of a pulse detonation combustor.
FIG. 5 is a schematic cross-sectional illustration of the pulse detonation combustor through the air-valve section of FIG. 4.
FIG. 6 is a side sectional illustration of a sliding sleeve air-valve for a pulse detonation combustor with its valve in a closed position.
FIG. 7 is a side sectional illustration of the sliding sleeve air-valve for the pulse detonation combustor of FIG. 6 with its valve in an open position.
FIG. 8 is a side sectional illustration of a translating centerbody air-valve for a pulse detonation combustor with its valve in an open position.
FIG. 9 is a side sectional illustration of a translating centerbody air-valve for a pulse detonation combustor of FIG. 8 with its valve in a closed position.

### DETAILED DESCRIPTION OF THE INVENTION

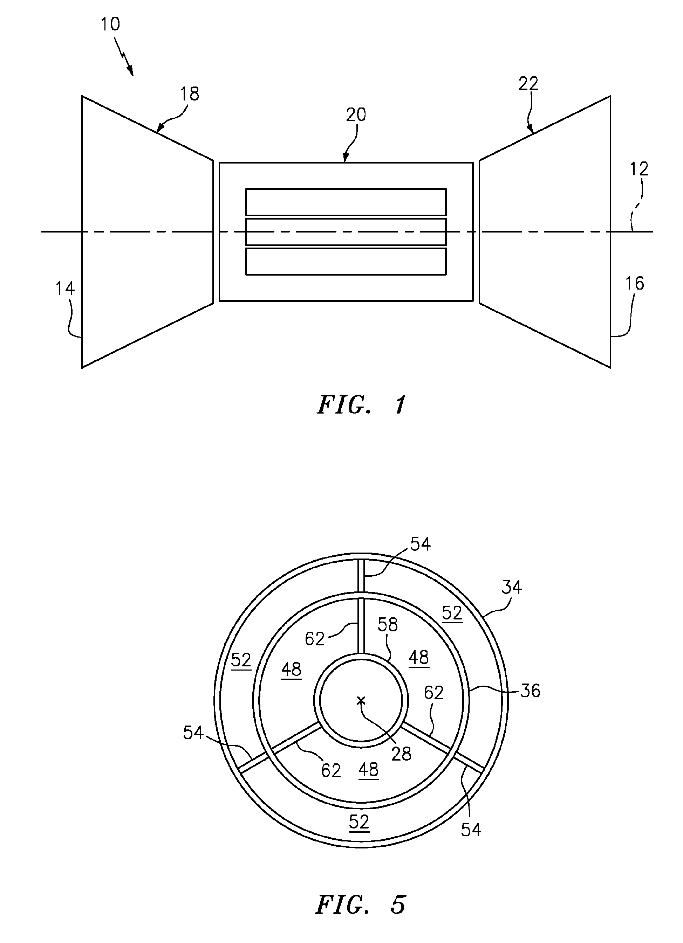

FIG. 1 schematically illustrates an exemplary embodiment of a turbine engine 10 with a pulse detonation combustor. It is worth noting, the pulse detonation combustor is described herein as being configured with the turbine engine 10 for ease of description. The pulse detonation combustor of the present disclosure, however, is not limited to turbine engine applications as discussed below in further detail.

The turbine engine 10 of FIG. 1 extends along an engine centerline 12 from an upstream airflow inlet 14 to a downstream airflow exhaust 16. The turbine engine 10 includes a compressor section 18, a combustor section 20 and a turbine section 22, which are serially arranged along the engine centerline 12.

Briefly, the compressor section 18 is configured to compress air received from the airflow inlet 14. The combustor section 20 is configured to receive and mix the compressed air from the compressor section 18 with fuel to provide a fuel-air mixture. The combustor section 20 is further configured to ignite and thereby detonate the fuel-air mixture to generate detonation waves. The turbine section 22 is configured to receive and use energy from the detonation waves to power the compressor section 18. The detonation waves subsequently travel out of the turbine engine 10 through the airflow exhaust 16 thereby providing engine thrust.

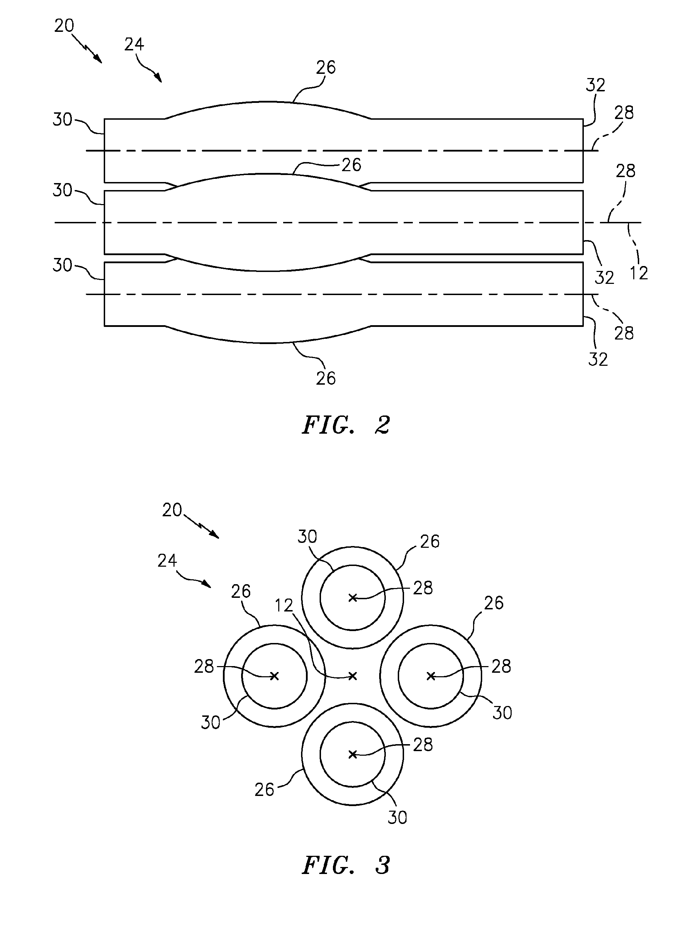

FIGS. 2 and 3 schematically illustrate a combustor assembly 24 for the combustor section 20 of FIG. 1. This combustor assembly 24 includes a plurality of pulse detonation combustors 26 arranged in an array about the engine centerline 12. Each of these pulse detonation combustors 26 extends along a combustor centerline 28 from an upstream inlet 30 to a downstream outlet 32, which centerline 28 may be substantially parallel with (or angled relative to) the engine centerline 12. Each upstream inlet 30 is fluidly coupled with the compressor section 18 (see FIG. 1). Each downstream outlet 32 is fluidly coupled with the turbine section 22 (see FIG. 1).

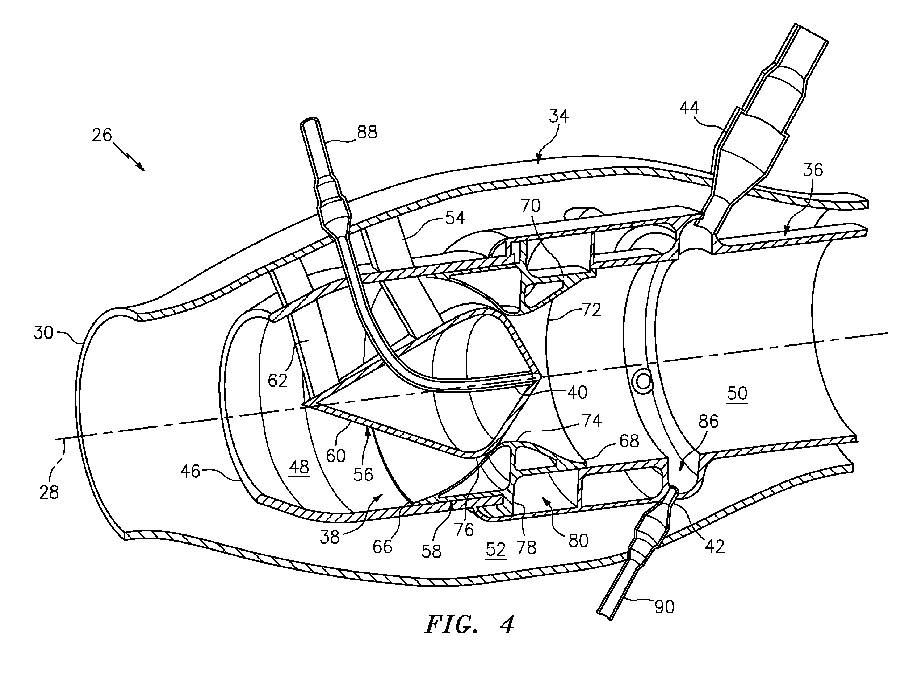

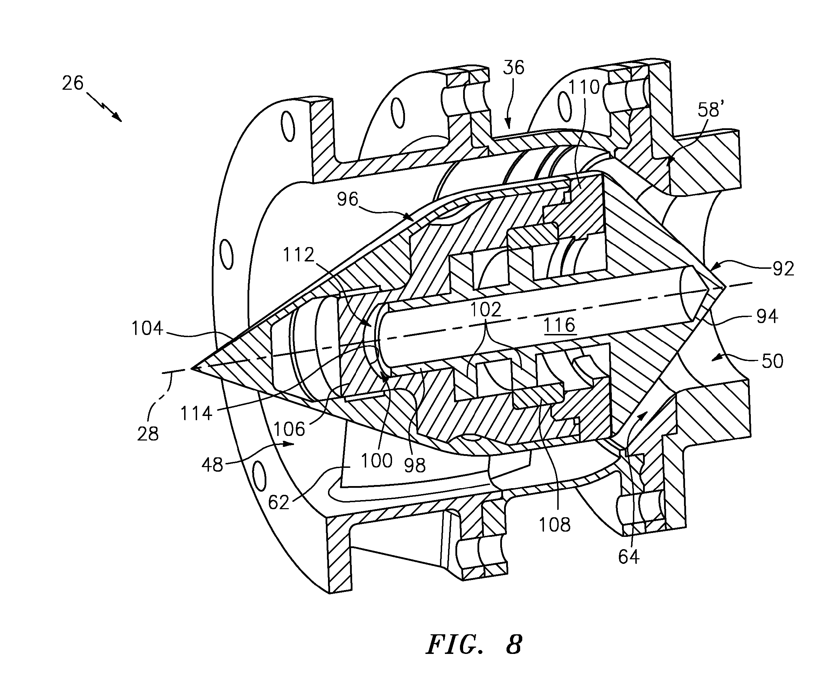

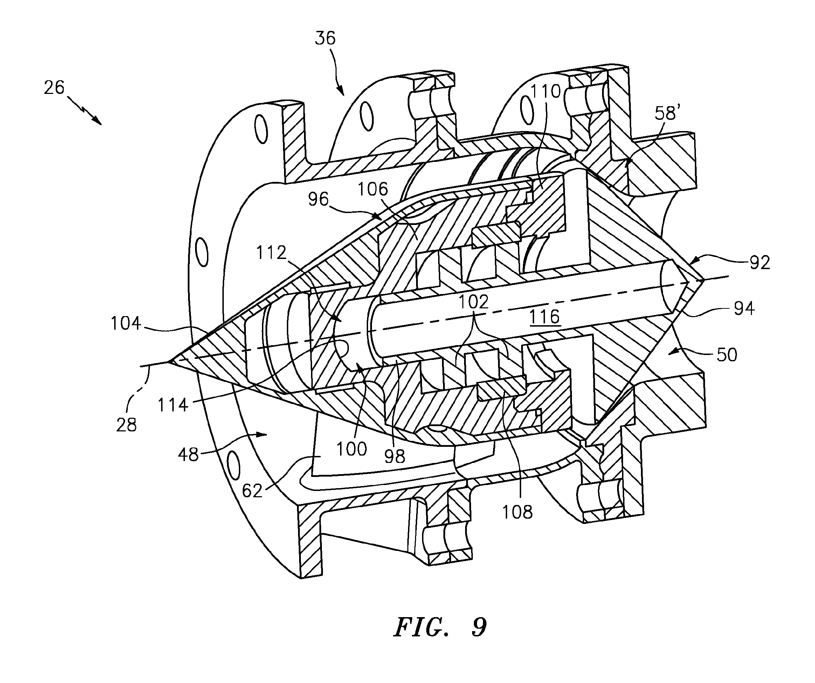

Referring now to FIG. 4, each of the pulse detonation combustors 26 includes an outer bypass duct wall 34, an inner combustor wall 36 (e.g., a combustor shell), an airflow valve 38, one or more fuel injectors 40 and 42, and one or more igniters 44. The duct wall 34 has a tubular body that extends axially along the combustor centerline 28 from the upstream inlet 30 to the downstream outlet 32 (see FIG. 2). It is worth noting, in alternative embodiments, the duct wall 34 may be omitted (e.g., see FIGS. 8 and 9); e.g., the combustor wall 36 may extend axially along the combustor centerline 28 from the upstream inlet 30 to the downstream outlet 32.

Referring still to FIG. 4, the combustor wall 36 has a tubular body, which may be substantially coaxial with the duct wall 34. The combustor wall 36 extends axially along the combustor centerline 28 from an upstream inlet 46 towards (or to) the downstream outlet 32 (see FIG. 2). An inner bore of the combustor wall 36 forms an upstream airflow inlet 48 and a downstream combustion chamber 50. The combustor wall 36 is radially displaced from the duct wall 34 so as to form an annular bypass flowpath 52 between the duct wall 34 and the combustor wall 36. This bypass flowpath 52 may be utilized to provide cooling and/or bypass air to one or more other components of the turbine engine 10. The combustor wall 36 may be connected to (e.g., formed integral with or mechanically fastened, bonded and/or otherwise attached to) the duct wall 34 by one or more support struts 54 (see also FIG. 5). One or more of these support struts 54 may be hollow so as to provide a passage radially through the strut 54. One or more of the support struts 54 may also be configured as an airfoil or shaped body to minimize flow losses; e.g., a structural guide vane.

The air-valve 38 is arranged within the combustor wall 36 between the airflow inlet 48 and combustion chamber 50. The valve 38 is configured to selectively fluidly couple the airflow inlet 48 with the combustion chamber 50 and decouple the airflow inlet 48 from the combustion chamber 50. The valve 38 includes a fixed center body 56 and an annular translating sleeve 58.

The center body 56 may have a forebody 60 with a generally aerodynamically shaped (e.g., teardrop) cross-sectional geometry; however, the center body 56 is not limited to any particular geometric configurations. The center body 56 may be connected to the combustor wall 36 by one or more support struts 62 (see also FIG. 5). One or more of these support struts 62 may be hollow so as to provide a passage radially through the strut 62, and may be aligned (or offset from) the support struts 54. One or more of the support struts 62 may also be configured as an airfoil; e.g., a structural guide vane.

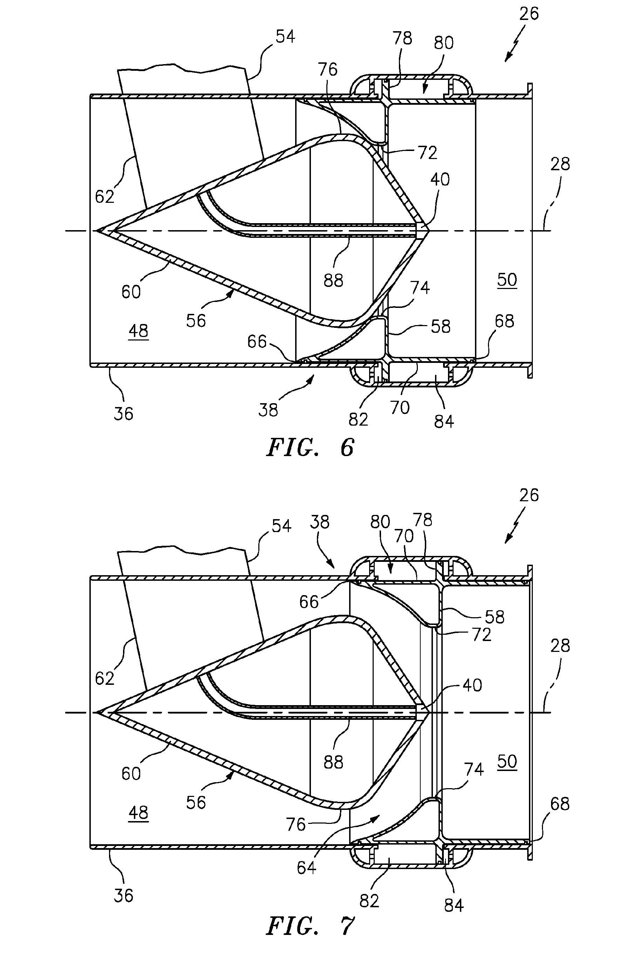

The sleeve 58 is configured to translate (e.g., move) axially along the combustor centerline 28 between a closed position (see FIG. 6) and an open position (see FIG. 7). In the closed position of FIG. 6, the sleeve 58 is configured to extend between and sealingly engage (e.g., contact) the combustor wall 36 and the center body 56 to seal the flow passage. In this manner, the sleeve 58 may be positioned to fluidly decouple the airflow inlet 48 from the combustion chamber 50. In contrast, in the open position of FIG. 7, an annular channel 64 is opened radially and axially between the center body 56 and the sleeve 58. In this manner, the sleeve 58 may be positioned to fluidly couple the airflow inlet 48 with the combustion chamber 50.

Referring again to FIG. 4, the sleeve 58 extends axially along the combustor centerline 28 from an upstream end 66 to a downstream end 68. The sleeve 58 includes a base 70, which is configured to sealingly engage (e.g., engage and seal against) and slide against the combustor wall 36. The sleeve 58 also includes an annular ridge 72 (or any other type of projection), which projects radially inwards from the base 70 to an apex 74. This ridge 72 has an innermost diameter at its apex 74 that is less than an outermost diameter of the center body 56 at its apex 76. In this manner, the ridge 72 may axially sealingly engage the center body 56 to fluidly decouple the airflow inlet 48 from the combustion chamber 50. The ridge 72 may gradually radially taper to the base 70 at (e.g., on, adjacent or proximate) the upstream end 66. The ridge 72 may also radially taper to the base 70 at the downstream end 68, or not as illustrated in FIGS. 6 and 7. Of course, the sleeve 58 may have various alternative geometries upstream and/or downstream of its apex 74 other than those described above and illustrated in the drawings.

The sleeve 58 may also include an actuator member 78 (e.g., annular flange) that projects radially out from the base 70, for example, approximately opposite the apex 74 of the ridge 72. The actuator member 78 is located within a (e.g., annular) channel 80 formed in the combustor wall 36. Referring to FIGS. 6 and 7, fluid such as gas (e.g., compressed air) or liquid (e.g., fuel, lubricant or hydraulic fluid) may be pumped into a cavity 82 formed between an upstream surface defining the channel 80 and the actuator member 78 so as to assist with or completely move the sleeve 58 in a downstream direction; e.g., away from the center body 56. In addition or alternatively, such fluid may be pumped into another opposing cavity 84 formed between a downstream surface defining the channel 80 and the actuator member 78 so as to assist with or completely move the sleeve 58 in an upstream direction; e.g., towards the center body 56. In this manner, the actuator member 78 may form a pneumatic or hydraulic actuator with the combustion chamber 50. The valve 38, however, is not limited to being moved by any particular type of actuator.

Referring to FIG. 4, each of the fuel injectors 40 and 42 is configured to inject fuel into the combustion chamber 50. The upstream fuel injector 40 shown in FIG. 4 is configured with the center body 56. More particularly, this upstream fuel injector 40 is located in an orifice at a downstream tip end of the center body 56. The one or more downstream fuel injectors 42 may be arranged in a circumferential array an axial distance downstream of the center body 56. One or more of these downstream fuel injectors 42 may also extend into a channel 86 (e.g., an annular flame holder channel) formed in the combustor wall 36. This channel 86 may be located axially just downstream of the downstream end 68 when the sleeve 58 is in the open position. In alternate embodiments, however, the channel 86 and/or the fuel injectors 40 and 42 may be located at various other locations.

Each of the fuel injectors 40 and 42 is fluidly coupled with a fuel distribution system (not shown) by a fuel conduit 88, 90. The fuel conduit 88 for the upstream fuel injector 40, in particular, may extend radially through the struts 54 and 62 and into the center body 56 where it may be connected to the injector 40.

Each of the igniters 44 is configured to ignite the fuel injected within the combustion chamber 50. The igniters 44 may be arranged in a circumferential array an axial distance downstream of the center body 56. One or more of these igniters 44 may also extend into the channel 86. Of course, in alternative embodiments one or more of the igniters 44 may be located elsewhere. It is also worth noting, in some embodiments, the combustor wall 36 may be configured without the channel 86.

During a first step of a pulse detonation cycle, the valve 38 is opened to permit air to flow, through the airflow inlet 48, into the combustion chamber 50. The sleeve 58, for example, is translated from the closed position of FIG. 6 to the open position of FIG. 7. The valve 38 may be opened by directing the fluid into the cavity 82 and/or utilizing a natural pressure differential between the airflow inlet 48 and the combustion chamber 50. More particular, during this first step, the upstream pressure and airflow inlet 48 is higher than that in the combustion chamber 50. One or more of the fuel injectors 40 and 42 also injects fuel into the compressed air flowing into the combustion chamber 50, which facilitates mixing the fuel with the air to provide the fuel-air mixture. In some embodiments, fuel can also be injected via one or more additional fuel injectors (not shown) upstream of the valve 38 to promote mixing prior to apportioning the fuel/air mixture to the combustion chamber 50.

In a second step of the pulse detonation cycle, the valve 38 is closed to fluidly decouple the airflow inlet 48 from the combustion chamber 50. The sleeve 58, for example, is translated from the open position of FIG. 7 to the closed position of FIG. 6. The valve 38 may be closed by directing the fluid into the cavity 84. One or more of the igniters 44 also ignites the injected fuel (e.g., the fuel-air mixture). This ignition causes the fuel/air mixture to initiate a combustion event, which may generate a detonation wave that travels downstream through the combustion chamber 50. It is worth noting, the detonation wave is blocked from traveling upstream into the airflow inlet 48 since the valve 38 is closed. It is also worth noting, depending upon valve 38 timing, the detonation wave may be utilized to at least assist with the moving of (e.g., push) the sleeve 58 to the closed position of FIG. 6. Furthermore, the fluid within the cavity 82 may provide a cushion / buffer between the actuator member 78 and the base 70.

The first and the second steps of the pulse detonation cycle may be repeated one or more times at a frequency such as, but not limited to, between 50 and 100 Hertz or greater than 100 Hz. Relative sequencing of the pulse detonations for each of the pulse detonation combustors 26 (if an array of combustors) may be synchronized or staggered. It is worth noting, staggering the pulse detonation sequencing may be utilize to impart a swirl to the gas flowing from the combustor section 20 to the turbine section 22 (in the turbine engine application), which may be utilized to enhance turbine engine efficiency and/or power.

In some embodiments, referring to FIGS. 8 and 9, the sleeve 58 may be incorporated into the combustor wall 36 as a fixed sleeve 58' (e.g., an annular rib or other radially inward projection). The center body 56 may include a translating portion 92; e.g., a translating valve element or plug.

The translating portion 92 is configured to translate (e.g., move) axially along the combustor centerline 28 between a closed position (see FIG. 9) and an open position (see FIG. 8). In the closed position of FIG. 9, a downstream (e.g., conical) surface 94 of the translating portion 92 sealingly engages (e.g., contacts) the sleeve 58'. In this manner, the translating portion 92 may be positioned to fluidly decouple the airflow inlet 48 from the combustion chamber 50. In contrast, in the open position of FIG. 8, the annular channel 64 is opened radially and axially between the center body 56 and the sleeve 58'. In this manner, the translating portion 92 may be positioned to fluidly couple the airflow inlet 48 with the combustion chamber 50.

In the specific embodiment of FIG. 8, the translating portion 92 is mated with a fixed portion 96 of the center body 56. More particularly, a shaft 98 of the translating portion 92 extends into and is slidingly mated within a bore 100 of the fixed portion 96. One or more (e.g., annular) flanges 102 may project radially out from the shaft 98 and provide guides and/or support for translating movement of the translating portion 92. The fixed portion 96 of the center body 56 may include one or more subcomponents such as, but not limited to, an outer shell 104, a liner 106, a seal 108 and a cap 110. The liner 106 may be configured with one or more internal actuation fluid distribution circuits. These distribution circuits are adapted to direct actuation fluid from an actuation fluid conduit in at least one of the struts 62 to, for example, an actuation cavity 112 extending axially from a surface 114 of the liner 106 into a bore 116 of the shaft 98. In this manner, the actuation fluid may be directed into the actuation cavity 112 to push the translating portion 92 into the closed position of FIG. 9. The actuation fluid may subsequently be drawn out of the actuation cavity 112 and, for example, thereby pull (e.g., via suction) the translating portion 92 into the open position of FIG. 8. Of course, the valve 38 and its components may have other configurations than the exemplary ones described above.

The terms "upstream", "downstream", "inner" and "outer" are used to orientate the components of the combustor assembly 24 described above relative to the turbine engine 10 and its centerline 12 for a turbine application. One or more of these components described above, however, may be utilized in other orientations than those described above. For example, in some embodiments, the orientation of the valve 38 may be reversed such that the sleeve 58, 58' is generally upstream of the center body 56. The present invention therefore is not limited to any particular combustor assembly 24 spatial orientations.

The combustor assembly 24 may be included in various turbine engines other than the one described above. The combustor assembly 24, for example, may be included in a geared turbine engine where a gear train connects one or more shafts to one or more rotors in a fan section, a compressor section and/or any other engine section. Alternatively, the combustor assembly 24 may be included in a turbine engine configured without a gear train. The combustor assembly 24 may be included in a geared or non-geared turbine engine configured with a single spool, with two spools, or with more than two spools. The turbine engine may be configured as a turbofan engine, a turbojet engine, a propfan engine, or any other type of turbine engine. The present invention therefore is not limited to any particular types or configurations of turbine engines. Furthermore, the combustor assembly 24 and/or one or more of its combustors 26 may alternatively be configured for use with non-turbine engine equipment; e.g., industrial equipment such as but not limited to chimney cleaning equipment.

## Claims

1. A pulse detonation combustor, comprising:
a tubular combustor wall (36) forming an airflow inlet (48) and a combustion chamber (50); and
a valve (38) configured to selectively fluidly couple the airflow inlet (48) with the combustion chamber (50), the valve (38) including a center body (56) and an annular projection, wherein the center body (56) and the projection are configured to sealingly engage with one another.

2. The combustor of claim 1, wherein the valve includes an annular translating sleeve (58) comprising the projection.

3. The combustor of claim 2, wherein the translating sleeve (58) is configured to translate along a centerline (28) of the combustor wall (36) relative to the center body (56) to selectively open and close the valve (38).

4. The combustor of claim 2 or 3, wherein the center body (56) is attached to the combustor wall (36) by one or more struts (62).

5. The combustor of claim 2, 3 or 4 wherein the projection is configured to axially engage the center body (56).

6. The combustor of any of claims 2 to 5, further comprising an actuator configured to move the translating sleeve (58) relative to the center body (56).

7. The combustor of claim 1, wherein
the projection is fixed; and
at least a portion (92) of the center body (56) is configured to translate along a centerline (28) of the combustor wall (50) relative to the projection to selectively open and close the respective valve (38).

8. The combustor of claim 7, wherein the projection is configured into the combustor wall.

9. The combustor of claim 7 or 8, wherein the center body includes a translating portion (92) and a fixed portion (96) that is attached to the combustor wall by one or more struts.

10. The combustor of any preceding claim, further comprising a fuel injector (40, 42) and an igniter (44) arranged with the combustion chamber (50), wherein optionally:
during a step of a pulse detonation cycle, the air-valve (38) is configured to fluidly couple the airflow inlet (48) with the combustion chamber (50) and the injector (40, 42) is configured to inject fuel into the combustion chamber (50); and/or
during a step of a pulse detonation cycle, the valve (38) is configured to fluidly decouple the airflow inlet (48) from the combustion chamber (50) and the igniter (44) is configured to ignite a fuel-air mixture within the combustion chamber (50).

11. The combustor of any preceding claim, wherein the center body (58) has a generally aerodynamically shaped cross-sectional geometry.

12. The combustor of claim 1, wherein the center body (56) is attached to the combustor wall (36) by a strut (62), and a fuel conduit extends through the strut (62) and into the center body (56) to a nozzle (44) configured with the center body.

13. A pulse detonation combustor, comprising:
a tubular combustor wall (36) forming an airflow inlet (48) and a combustion chamber (50); and
a valve (38) configured to selectively fluidly couple the airflow inlet (48) with the combustion chamber (50), the valve (38) including a fixed center body (56) and an annular translating sleeve (58).

14. The combustor of claim 13, wherein:
the sleeve (58) is configured to translate along a centerline (28) of the combustor wall (56) relative to the center body (56) to selectively open and close the respective valve; or
the sleeve (58) includes an annular ridge that projects radially inward, and the ridge is configured to axially engage the center body;
wherein the combustor optionally further comprises an actuator configured to move the sleeve (58) relative to the center body.

15. A pulse detonation combustor, comprising:
a tubular combustor wall (36) forming an airflow inlet (48) and a combustion chamber (50); and
a valve (38) including a center body (56) and an annular projection fixed relative to the combustor wall (36), wherein at least a portion of the center body (56) is configured to selectively engage the projection to fluidly decouple the airflow inlet (48) from the combustion chamber (50); and
disengage the projection to fluidly couple the airflow inlet (48) with the combustion chamber (50).
